(19) Europäisches Patentamt
European Patent Office
Office européen des brevets

(11) **EP 4 292 973 A2**

(12) **EUROPÄISCHE PATENTANMELDUNG**

(43) Veröffentlichungstag:
**20.12.2023 Patentblatt 2023/51**

(21) Anmeldenummer: **23207336.1**

(22) Anmeldetag: **23.09.2021**

(51) Internationale Patentklassifikation (IPC):
**B66D 3/26** (2006.01)

(52) Gemeinsame Patentklassifikation (CPC):
**B66D 3/26**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(62) Dokumentnummer(n) der früheren Anmeldung(en) nach Art. 76 EPÜ:
**21198589.0 / 4 155 252**

(71) Anmelder: **Pewag Austria GmbH**
**8605 Kapfenberg (AT)**

(72) Erfinder: **Pengg, Ägyd**
**9020 Klagenfurt (AT)**

(74) Vertreter: **Patentanwaltskanzlei**
**Matschnig & Forsthuber OG**
**Biberstraße 22**
**Postfach 36**
**1010 Wien (AT)**

Bemerkungen:
Diese Anmeldung ist am 02-11-2023 als Teilanmeldung zu der unter INID-Code 62 erwähnten Anmeldung eingereicht worden.

(54) **DOPPELKETTENRAD UND KETTENZUG MIT DOPPELKETTENRAD**

(57)   Ein Kettentrieb (D0) für einen Kettenzug mit zwei Gliederketten weist zwei Kettenräder auf, die nebeneinander auf einer Welle des Kettentriebs angeordnet sind, wobei jedes Kettenrad zur Führung jeweils eines Abschnitts einer Gliederkette mit abwechselnd liegenden und stehenden Gliedern dient, nämlich mit Taschen zur Aufnahme liegender Glieder und mit einer in Umfangsrichtung verlaufenden Rille zur Aufnahme stehender Glieder. Die Kettenräder sind zueinander drehfest ohne relativen Winkelversatz angeordnet, einen festen Winkelversatz, der kleiner ist als die Winkelteilung zwischen zwei aufeinanderfolgenden Kettengliedern eines Kettenrads. Dieser Kettentrieb wird in einem Kettenzug mit verdoppelter Gliederkette verwendet, wobei zwei Gliederkettenstränge über je eines der beiden Kettenräder geführt sind.

D0 →

Fig. 20

EP 4 292 973 A2

**Beschreibung**

Die Erfindung betrifft einen Kettentrieb mit verdoppeltem Kettenrad für einen Kettenzug, worin mehr als eine Gliederkette als Tragmittel zum Einsatz kommt. Insbesondere betrifft die Erfindung einen Kettentrieb für einen Kettenzug, der zwei oder mehr Gliederkettensträngen, was insbesondere den Fall zweier Gliederketten sowie den Fall einer verdoppelten Gliederkette beinhaltet, wobei der Kettentrieb zwei bzw. mehrere Kettenräder aufweist, die nebeneinander auf einer Welle des Kettentriebs und zueinander drehfest angeordnet sind, wobei jedes Kettenrad zur Führung jeweils eines Abschnitts einer Gliederkette mit abwechselnd liegenden und stehenden Gliedern ausgebildet ist. Die Kettenräder haben hierzu Taschen zur Aufnahme liegender Glieder sowie eine in Umfangsrichtung verlaufenden Rille zur Aufnahme stehender Glieder.

Weitere nicht zur Erfindung gehörende Ausgestaltungen betreffen eine Anschlagvorrichtung für ein Kettengehänge mit zwei parallel verlaufenden Gliederkettensträngen, wobei die Anschlagvorrichtung in Bezug auf eine vorgesehene Lastrichtung ausgelegt ist und an einem Ende ein Verbindungsteil für eine Last und an einem diesem in Lastrichtung gesehen gegenüber liegenden Ende zwei nebeneinander angeordnete Anschlussstellen für je ein Endglied jedes Gliederkettenstranges umfasst. Hierzu gehört auch ein Kettentriebsystem für einen Kettenzug mit zwei (oder mehr) Gliederketten(strängen), der eine derartige Anschlagvorrichtung und/oder einen derartigen Kettentrieb umfasst.

Ein Kettenzug ist ein Hebezeug, worin Gliederketten - insbesondere industrielle Rundstahlketten oder Profilstahlketten - als Tragmittel für das Heben und/oder Bewegung von Lasten eingesetzt werden. Darin werden die Kettenglieder eines Kettenstranges über ein Kettenrad (auch als Kettennuss bezeichnet) geführt, wobei die Glieder des Kettenstranges abwechselnd auf der Außenfläche des Kettenrads stehend und liegend orientiert sind. Auch das gleichzeitige Führen von zwei Ketten über einen Kettentrieb, der ein verdoppeltes Kettenrad beinhaltet, ist beispielsweise in Fig. 20 erkennbar, worin ein Doppelkettenrad D0 gemäß dem Stand der Technik gezeigt ist, zusammen mit einer symbolhaften Darstellung einiger Kettenglieder von zwei Kettensträngen, die jeweils über eines der beiden Kettenräder geführt sind. Die Kettenglieder sind abwechselnd stehend und liegend auf dem jeweiligen Kettenrad orientiert.

Ein bekanntes Problem bei Kettenzügen mit Gliederketten ist der Polygoneffekt. Dabei handelt es sich um ein rhythmisches Aufschwingen des Lastkettenzuges beim Einziehen der Kette, das durch die unterschiedlichen Wirkradien der Kette auf der Zugrolle entsteht. Im Extremfall kann sich die Kette bis zur Resonanzfrequenz aufschwingen.

Um die genannten Nachteile zu verringern, insbesondere zur Verringerung des Polygoneffekts wird in den nicht zur Erfindung gehörenden Ausgestaltungen vorgeschlagen, dass ein erstes Kettenrad gegenüber einem zweiten Kettenrad "verdreht" ist, d.h. es weist einen festen Winkelversatz (größer als 0°, beispielsweise zumindest 5°) auf, der kleiner ist als die Winkelteilung zwischen zwei aufeinanderfolgenden Kettengliedern des ersten Kettenrads. Die Winkelteilung ist im Kettenrad als der halbe Winkel zwischen aufeinanderfolgenden Kettentaschen bestimmbar. Durch diese vergleichsweise einfache Maßnahme ergibt sich eine überraschend effektive Reduzierung des Polygoneffektes um zumindest die Hälfte eines einzelnen Kettenrades. Der Polygoneffekt, der bei einen einsträngigen Kettenzug unvermeidlich ist, wird dank dieser Lösung signifikant reduziert. Durch die Lastverteilung auf zwei Kettenstränge können sich die zeitlich unterschiedlichen radialen Auslenkungen der beiden Kettenstränge gegeneinander in hohem Maße ausgleichen.

Insbesondere hat sich gezeigt, dass hinsichtlich der Reduzierung des Polygoneffektes günstige Werte des Winkelversatzes bei etwa einer halben Winkelteilung liegen. Allgemeiner sollte bevorzugt der Winkelversatz nicht kleiner als eine halbe Winkelteilung sein. Ein Winkelversatz, dessen Wert über einer halben Winkelteilung liegt, ist aus Symmetriegründen gleichbedeutend mit dem zugehörenden Komplement in Bezug auf die doppelte Winkelteilung. Ein für eine zweckmäßige Reduktion des Polygoneffekts günstiger Bereich für den Winkelversatz V ist insbesondere etwa $U_1/3 \leq V \leq 5U_1/6$, vorzugsweise $U_1/2 \leq V \leq 2U_1/3$, wobei $U_1$ die Winkelteilung bezeichnet.

Wenngleich nicht unbedingt erforderlich, ist es doch in vielen Fällen ratsam, wenn der Kettentrieb zudem ein Gehäuse aufweist, das die Kettenräder umgibt und innenseitig den Bewegungsraum der Kettenglieder auf den Kettenrädern in radialer Richtung begrenzt. Das Gehäuse kann innenseitig nebeneinander zwei Nuten aufweisen, in denen stehende Glieder der auf den Kettenrädern laufenden Gliederkettenstränge geführt sind. Dies ermöglicht, das auch der Bewegungsraum der liegenden Glieder in dem Gehäuse in günstiger Weise begrenzt werden kann.

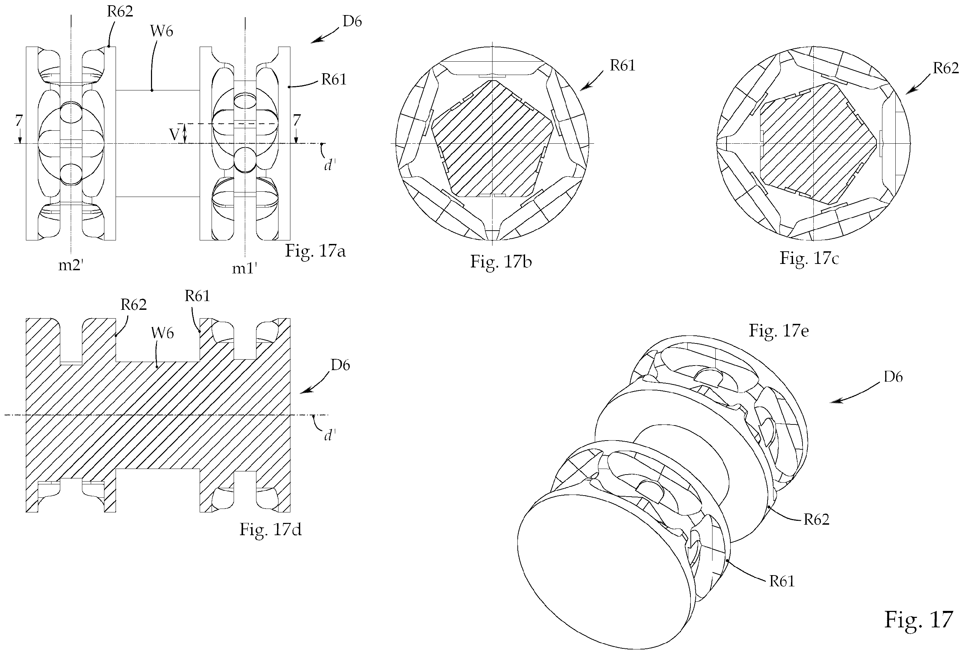

Die Kettenräder können unmittelbar einander anliegen, gegebenenfalls sogar einstückig sein, oder zueinander auf der Welle beabstandet sein; hierbei kann die Welle einen Bereich zwischen den Kettenrädern mit verringerten Durchmesser haben (vgl. Fig. 17).

Die genannte Aufgabe wird des Weiteren durch eine Anschlagvorrichtung der eingangs genannten Art sowie ein Kettentriebsystem für einen Kettenzug, welcher zwei (oder mehr) Gliederketten(stränge) beinhaltet - hierbei können zwei oder mehrere Kettenstränge auch Abschnitte derselben Gliederkette sein, die dann also verdoppelt geführt ist - und welcher diese Anschlagvorrichtung sowie einen oben beschriebenen Kettentrieb umfasst, gelöst, wobei in der Anschlagvorrichtung die Anschlussstellen zueinander entlang der Lastrichtung versetzt angeordnet sind, und zwar mit einem linearen Versatz, der kleiner ist als die Kettenteilung entlang der Lastrichtung.

Für das Verbindungsteil sind vielfältige Ausgestaltungen denkbar. Insbesondere kann das Verbindungsteil einen Anschlagbügel beinhalten, der fest angebracht sein kann, aber vorzugsweise verschwenkbar ist, in der Regel um eine Achse quer zur Lastrichtung, wobei diese Achse bevorzugt in der Ebene, in der die Gliederkettenstränge verlaufen, oder quer zu dieser liegt. Das Verbindungsteil kann aber auch eine Öffnung zur Anbindung der Last aufweisen. Dies kann z.B. ein Öhr sein. Die Öffnung kann auch ein Innengewinde aufweisen. Das Öhr bzw. die Öffnung kann quer zur Lastrichtung orientiert sein, und vorzugsweise quer zu der Ebene, in der die Gliederkettenstränge verlaufen. Alternativ oder in Kombination kann das Verbindungsteil einen Lasthaken umfassen; dieser kann bevorzugt um eine Achse parallel zur Lastrichtung drehbar an der Anschlagvorrichtung gelagert sein.

Um die Auswirkung der Bewegung zwischen den Kettensträngen weiter zu verringern, kann es günstig sein, wenn jede Anschlussstelle auf einem sich in Lastrichtung (oder einem geringem Winkel dazu, z.B. <45°) erstreckenden Schenkel angeordnet ist, wobei zwischen den Schenkeln ein Zwischenelement aus verformbarem Material zur Dämpfung von Schwingungen zwischen an den Anschlussstellen angebrachten Ketten angeordnet ist. Das Zwischenelement kann z.B. als Block aus einem elastomeren Material und/oder als hydraulisches Dämpferelement ausgebildet sein.

Ein Kettentriebsystem für einen Kettenzug mit zwei Gliederkettensträngen oder verdoppelter Gliederkette kann somit einen Kettentrieb wie oben erwähnt und eine Anschlagvorrichtung wie oben erwähnt umfassen.

Anstelle einer Anschlagvorrichtung im eigentlichen Sinne kann bei einem Kettenzug auch ein Kettenrad verwendet werden, das in eine verdoppelte Gliederkette eingelegt wird. Das ergibt somit ein Kettentriebsystem mit einem Kettentrieb wie bereits erwähnt, insbesondere mit beanstandeten Kettenrädern, sowie einem Kettenumlenkrad, das als Kettenrad ausgebildet ist; die Achse dieses Kettenumlenkrad kann dann zur Befestigung einer Last vorgesehen sein.

Die Erfindung samt weiteren Einzelheiten und Vorzügen wird nachstehend anhand einiger Ausführungsbeispiele näher erläutert, die in den Zeichnungen dargestellt sind und lediglich beispielhaft sind und nicht einschränkend für die Erfindung. Die Zeichnungen zeigen schematisch:

Fig. 1    eine perspektivischen Ansicht eines Kettentriebsystems mit einem Doppelkettenrad und einer ersten Anschlagvorrichtung gemäß einem ersten Ausführungsbeispiel;

Fig. 2    das Kettentriebsystem der Fig. 1 in einer Aufsicht (Fig. 2a), einer Vorderansicht (Fig. 2b) und einer Seitenansicht (Fig. 2c);

Fig. 3    die Abhängigkeit des gemittelten Kettenradius von dem Winkel im Laufe einer Drehung eines Kettenrades für vier verschiedene Werte des Versatzes;

Fig. 4    den Kettentriebbauteil der Fig. 1 in einer Vorderansicht (Fig. 4a), zwei Schnittansichten der beiden Kettenräder entlang der jeweiligen Mittelebene (Fig. 4b, 4c) und einer Längsschnittansicht (Fig. 4d);

Fig. 5    eine Hebewerkanordnung, die den Kettentrieb der Fig. 4 enthält, in einer Vorderansicht (Fig. 5a), einer Seitenansicht (Fig. 5b) und einer perspektivischen Ansicht (Fig. 5c);

Fig. 6    den Kettentrieb der Fig. 4 zusammen mit dem Gehäuse, das die Kettenräder umgibt, in einer Vorderansicht (Fig. 6a), in Schnittansichten entlang jeweils der Mittelebene der beiden Kettenräder (Fig. 6b, 6c), sowie eine Längsschnittansicht (Fig. 6d);

Fig. 7    ein Kettentriebsystem mit einer Anschlagvorrichtung gemäß einem zweiten Ausführungsbeispiel;

Fig. 8    das Kettentriebsystem der Fig. 7 in einer Aufsicht (Fig. 8a), einer Vorderansicht (Fig. 8b) und einer Seitenansicht (Fig. 8c);

Fig. 9    eine Vorderansicht der Anschlagvorrichtung der Fig. 7;

Fig. 10    ein Kettentriebsystem mit einer Anschlagvorrichtung gemäß einem weiteren Ausführungsbeispiel;

Fig. 11    das Kettentriebsystem der Fig. 10 in einer Aufsicht (Fig. 11a), einer Vorderansicht (Fig. 11b) und einer Seitenansicht (Fig. 11c);

Fig. 12    eine Vorderansicht der Anschlagvorrichtung der Fig. 10;

Fig. 13    ein Kettentriebsystem mit einer Anschlagvorrichtung mit einem Lasthaken gemäß noch einem Ausführungsbeispiel;

| Fig. 14 | das Kettentriebsystem der Fig. 13 in einer Aufsicht (Fig. 12a), einer Vorderansicht (Fig. 12b) und einer Seitenansicht (Fig. 12c); |
| --- | --- |
| Fig. 15 | ein Kettentriebsystem mit einem Kettentriebbauteil mit zueinander beabstandeten Kettenrädern und einem Kettenumlenkrad gemäß einem weiteren Ausführungsbeispiel; |
| Fig. 16 | das Kettentriebsystem der Fig. 15 in einer Aufsicht (Fig. 16a), einer Vorderansicht (Fig. 16b) und einer Seitenansicht (Fig. 16c); |
| Fig. 17 | den Kettentriebbauteil der Fig. 15 in einer Vorderansicht (Fig. 17a), zwei Schnittansichten der beiden Kettenräder entlang der jeweiligen Mittelebene (Fig. 17b, 17c), einer Längsschnittansicht (Fig. 17d), sowie einer perspektivischen Ansicht (Fig. 17e); |
| Fig. 18 und 19 | noch ein weiteres Kettentriebsystem in einer Seitenansicht (Fig. 18a) und einer Vorderansicht (Fig. 18b), sowie einer Ansicht des zugehörenden Anschlagbauteils (Fig. 19); und |
| Fig. 20 | ein Doppelkettenrad ohne Winkelversatz. |

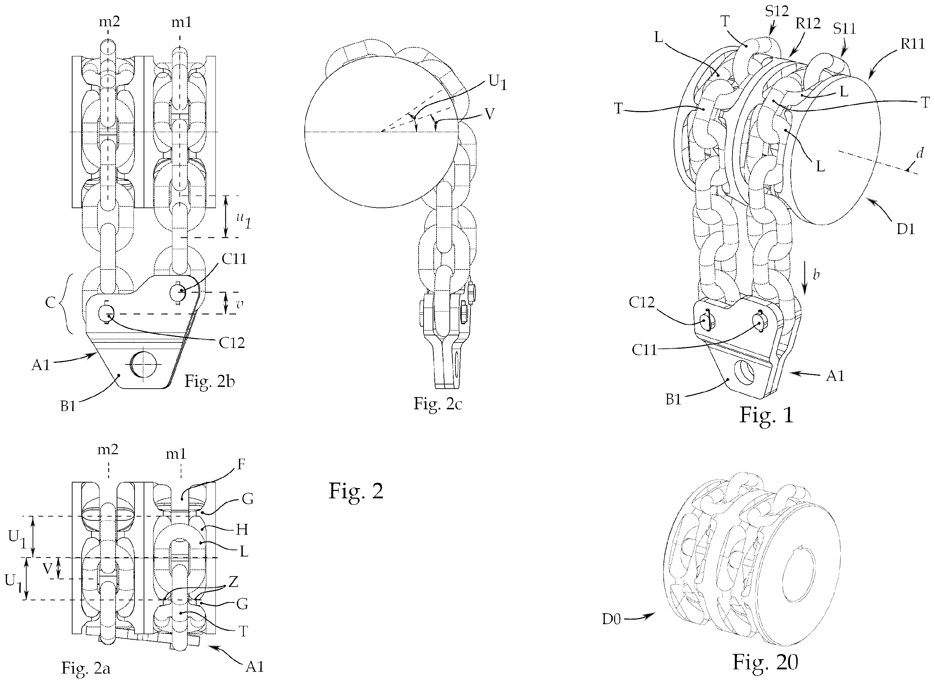

In den Figuren sind aus Gründen der Übersichtlichkeit gleiche Elemente mit denselben Bezugszeichen versehen. Die Bezugzeichen in den Ansprüchen dienen lediglich der besseren Verständlichkeit und stellen in keinem Fall eine Einschränkung auf die jeweiligen Ausführungsformen dar. In den Zeichnungen sind Ausführungsbeispiele gezeigt, worin - ohne dass dies einschränkend für die Erfindung aufzufassen ist - eine Last gegen die Schwerkraft getragen wird, und somit stimmt darin die Lastrichtung b (siehe Fig. 1) mit der Vertikalen überein; jedoch liegt es auf der Hand, dass in anderen Anwendungen die Lastrichtung auch anders orientiert sein kann, wie etwa beim Transport der Last entlang einer Bahn, wobei dann die Lastrichtung in der Regel der Verlaufsrichtung des Weges entspricht. Generell verlaufen die Ketten, die in dem Kettenzug als Lastmittel verwendet werden, im belasteten Betriebszustand im Wesentlichen symmetrisch entlang der Lastrichtung. Begriffe wie "oberer Bereich", "unterer" oder "Unterseite" sind in diesem Sinne zu verstehen, nämlich in Bezug auf eine Orientierung gemäß einer vertikal gedachten Lastrichtung.

Die nachfolgend dargestellten Ausführungsbeispiele betreffen Kettentriebe, die für Rundstahlketten ausgelegt sind, bei denen die einzelnen Kettenglieder gegeneinander um 90° um die Verlaufsrichtung der Kette verdreht sind. Die Ketten können auch Kettenglieder anderer Formgebung sein, wie z.B. Profilstahlketten, und der Fachmann kann die entsprechenden Anpassungen der erfindungsgemäßen Kettenräder und Kettentriebsysteme für Ketten dieser Arten ohne Weiteres vornehmen. Die Ketten sind in der Regel aus Stahl wie z.B. Einsatzstahl gefertigt, aber auch vergüteter Stahl wird verwendet.

Wenn eine Gliederkette über ein Kettenrad eines erfindungsgemäßen Kettentriebs geführt ist, sind die einzelnen Kettenglieder darauf abwechselnd stehend T und liegend L (siehe z. B. Fig. 1) auf dem jeweiligen Kettenrad gehalten und so geführt. Die Begriffe "stehend" und "liegend" haben hierbei die bereits im Stand der Technik gebräuchliche Bedeutung: Ein stehendes Kettenglied T ist ein Kettenglied, das mit (nur) einem Schenkel abgestützt ist. Das Auge eines auf dem Kettenrad stehenden Kettenglieds ist im Wesentlichen parallel zur Drehachse des Kettenrades orientiert. Auf einem Kettenrad befindet sich häufig dieser Schenkel des stehenden Kettenglied in einer in Umfangsrichtung verlaufenden Rille des Kettenrades, die die Lage des Kettenglieds festlegt. Ein liegendes Kettenglied L ist ein Kettenglied, dessen beide Schenkel nebeneinander aufliegen. Das Auge eines liegenden Kettenglieds auf dem Kettenrad ist im Wesentlichen radial in Bezug auf die Drehachse des Kettenrades orientiert. In den hier betrachteten Kettenrädern sind in der Regel Kettentaschen vorgesehen, die jeweils ein liegendes Kettenglied aufnehmen.

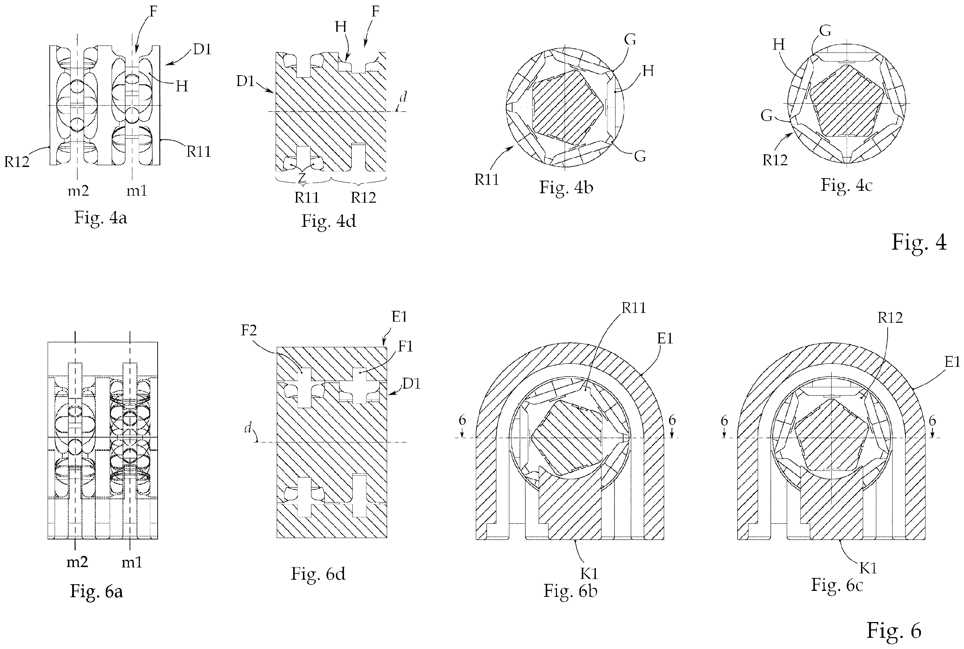

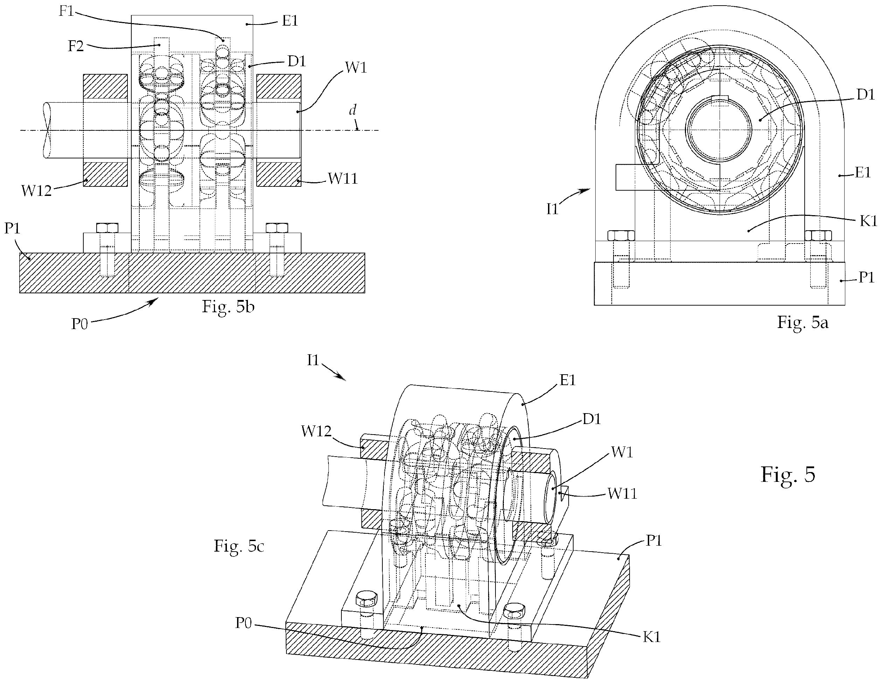

Fig. 1 ist eine perspektivischen Ansicht ein Kettentriebsystem mit einem Kettentrieb in Form eines Doppelkettenrads D1 gemäß einem ersten Ausführungsbeispiel, zusammen mit zwei darauf geführten Kettensträngen S11, S12 eines Kettenzugs, an deren Enden zudem eine Anschlagvorrichtung in Form eines Anschlagbauteils A1 befestigt ist. In Fig. 2 ist das Kettentriebsystem in drei Ansichten (Fig. 2a-2c) gezeigt, nämlich in einer Aufsicht (Fig. 2a; Blickrichtung entlang der Lastrichtung b), einer Vorderansicht (Fig. 2b) und einer Seitenansicht (Fig. 2c; Blickrichtung parallel zur Drehachse d des Kettenrades). In den Fig. 1 und 2 ist der Kettentrieb ohne Gehäuse gezeigt, damit das Kettenrad und die darin geführten Kettenstränge besser sichtbar sind; das Gehäuse E1 ist optional und wird weiter unten anhand der Fig. 5 und 6 erläutert.

Wie in Fig. 1 und 2 erkennbar sind die beiden Kettenstränge S11, S12 um je eines der beiden Kettenräder R11, R12 des Doppelkettenrades D1 geführt, wobei die einzelnen Kettenglieder abwechselnd stehend T und liegend L auf dem jeweiligen Kettenrad R11, R12 gehalten und so geführt sind.

Jedes der Kettenräder R11, R12 ist als sogenanntes Taschenkettenrad ausgebildet. Es besitzt demnach Taschen H, die der ovalen Gliedform angepasst sind und die eine im wesentlichen plane Auflagefläche (Taschenboden) für je ein liegendes Kettenglied L besitzen. In der Längsmitte der Taschen kann gegebenenfalls zudem Vertiefungen ausgebildet sein, die dazu dienen, einen allfälligen Schweißwulst (nicht gezeigt) um einen Schenkel des Kettengliedes aufzunehmen, damit das Kettenglied L auch bei Vorhandensein eines solchen Schweißwulstes auf der Auflagefläche der Tasche H ebenflächig aufliegen kann. Die Taschen des Kettenrades sind gegeneinander durch Stege G abgegrenzt, wobei jeder Steg durch eine Rille F zur Aufnahme der stehenden Glieder T in der Mittenebene m1, m2 des Kettenrades R11, R12 geteilt ist, sodass ein Steg G in zwei Zähne Z (jeweils links und rechts der Mittelebene m1 bzw. m2) geteilt ist. Im vorliegenden Ausführungsbeispiel hat das Kettenrad in der Seitenansicht eine pentagonale Formgebung, mit fünf Taschen H und dementsprechend fünf diese gegeneinander begrenzenden Stegen G; doch ist es klar, dass ein Kettenrad ohne Weiteres auch eine größere oder kleinere Anzahl von Taschen sowie Stegen besitzen kann. Die Stege G haben konvexe Flanken, die an ihrem "inneren" (d.h. der Drehachse d nächstgelegenen) Rand unmittelbar in die planen Auflageflächen der Taschen H übergehen, bevorzugt mit einer ausgeprägten Übergangskante. In dem vorzugsweise eben ausgebildeten Boden der Rillen F für die stehenden Glieder T kann zusätzlich zwischen den Zähnen Z eine Eintiefung ausgenommen sein, die dem gleichen Zweck dient, wie die oben erwähnte Vertiefung im Taschenboden, nämlich der Aufnahme eines allfälligen Schweißwulstes (nicht gezeigt) des stehenden Gliedes T, damit dieses mit der ebenen Außenseite seines inneren Schenkels ebenflächig auf dem Rillenboden aufliegen bzw. sich abstützen kann. Das Abstützen der stehenden Glieder T am Rillenboden der Rille F ist nämlich für die Funktion des Kettentriebes bzw. -rades von großer Bedeutung, da sich die liegenden Glieder L beim Einschwenkvorgang ihrerseits an den stehenden T abstützen, wodurch ein Einschwenken der liegenden Kettenglieder auf die jeweiligen Taschenböden in korrekter Lage erleichtert wird. Durch diese Gestaltung des Kettenrades sind sowohl die liegenden Glieder L als auch die stehenden Glieder T flächig abgestützt, nämlich die liegenden Glieder L mit einem Großteil ihrer Seitenflächen an der Auflagefläche der Taschen und die stehenden Glieder T mit der Außenfläche des innen liegenden Schenkels an dem Rillenboden.

In dem erfindungsgemäßen Doppelkettenrad sind die beiden Kettenräder R11, R12 nebeneinander koaxial drehfest miteinander verbunden. In der in Fig. 20 gezeigten Ausführungsform des Doppelkettenrades 20 liegen die beiden Kettenräder ohne Winkelversatz nebeneinander. Kettenglieder von Gliederkettensträngen, die jeweils über je eines der beiden Kettenräder geführt sind, sind ebenfalls in Fig. 20 angedeutet.

In weiteren Ausgestaltungen, die nicht Teil der hier beanspruchten Erfindung sind, haben die Kettenräder zueinander einen Winkelversatz größer 0°, d.h. die Kettentaschen des einen Kettenrades R11 befinden sich in einer unterschiedlichen Winkellage zu den Kettentaschen des anderen Kettenrades R12, gesehen entlang der Drehachse d. Gleichbedeutend kann dies auch auf die Stege G bezogen werden, d.h. es befinden sich die Stege G des einen Kettenrades R11 in einer unterschiedlichen Winkellage zu den Stegen G des anderen Kettenrades R12, bei Blickrichtung entlang der Drehachse d. Dieser Winkelversatz ist in Fig. 2 mit V bezeichnet und beträgt in der Ausführungsform der Fig. 1 und 2 ca. 18°, was der Hälfte der Winkelteilung $U_1$ der Kette auf dem pentagonalen Kettenrad entspricht.

Im Allgemeinen wird in den nicht zur Erfindung gehörenden Ausgestaltungen vorgeschlagen, dass der Winkelversatz V kleiner ist als die Winkelteilung $U_1$. Die Winkelteilung $U_1$ ist auf einem Kettenrad als der Winkelunterschied zwischen einer Kettentasche H und einem der beiden Stege G, die diese Kettentasche begrenzen, erkennbar, gemessen beispielsweise anhand der Radiusstrahlen, die durch den Mittelpunkt der Kettentasche bzw. des Stegs verläuft (vgl. Fig. 2c). Damit gleichbedeutend ist die Winkelteilung $U_1$ die Hälfte des Winkelunterschiedes zwischen je zwei aufeinanderfolgenden Kettentaschen H (oder Stegen G) desselben Kettenrades; dadurch haben auch zwei aufeinanderfolgende Kettenglieder T, L auf dem Kettenrad zueinander einen Winkelabstand, der der Winkelteilung $U_1$ entspricht. Beispielsweise ist $0 < V < U_i$, wobei bevorzugt $V \geq U_1/2$, wie weiter unten eingehender diskutiert wird.

Die Last wird an den Enden der beiden Kettenstränge mit Hilfe einer Anschlagvorrichtung angeschlossen, die jeweils eine Anschlussstelle für die beiden Kettenstränge aufweist, wobei diese Anschlussstellen zueinander entlang der Lastrichtung versetzt angeordnet sind, nämlich um einen Versatz, der kleiner ist als die Kettenteilung entlang der Lastrichtung.

In dem in Fig. 1 und 2 gezeigten Ausführungsbeispiel ist die Anschlagvorrichtung als Anschlagbauteil A1 gestaltet, auch als Anschlagwippe A1 bezeichnet. Die Anschlagwippe A1 ist aus zwei gestanzten Formblechen aus Stahl, z.B. Einsatzstahl oder vergütetem Stahl, gebildet, die zueinander spiegelbildlich geformt sind und miteinander im Bereich des Verbindungsteils B1 verschweißt sind. Die Anschlagwippe ist in zwei Abschnitte gegliedert: einem Anschlussabschnitt C (d.i. in Fig. 1 und 2b der obere Teil), worin die beiden Formblechteile gabelartig auseinander laufen, und den bereits erwähnten Verbindungsteil B1 (d.i. in Fig. 1 und 2b der untere Teil des Anschlagbauteils). Der gabelartig gestaltete Anschlussabschnitt ist zum Anschluss je eines Endgliedes der beiden Gliederketten vorgesehen, die in den Zwischenraum der Gabelform aufgenommen werden, und weist hierzu zwei Anschlussstellen C11, C12 auf. Jede Anschlussstelle weist im gezeigten Ausführungsbeispiel jeweils ein Paar einander gegenüberliegender Bohrungen auf, durch die ein Bolzen geführt werden kann. Zum Anschließen einer Ketten wird das Endglied der Kette in den Zwischenraum der Gabel eingeführt, der Bolzen wird durch die Bohrungen geführt und mit Splinten gesichert. Der Verbindungsteil B1 ist im Ausführungsbeispiel der Fig. 1 und 2 mit einem Öhr ausgebildet, in dessen Öffnung ein Haken eingehängt oder anderes Anschlagmittel, an dem die Last befestigt ist, angebracht werden kann. Das Öhr des Verbindungsabschnittes B1 ist somit quer zur Lastrichtung orientiert und vorzugsweise zudem quer zu der Ebene, in der die Gliederketten verlaufen. Alternativ oder in Kombination mit dem Öhr kann auch eine Gewindebohrung (nicht gezeigt) vorgesehen sein, d.h. eine Öffnung mit einem Innengewinde, in die - vorzugsweise beiderseits - ein Anschlagmittel (z.B. eine Stange zur Befestigung) eingesetzt bzw. eingeschraubt werden kann. Die Gewindebohrung ist ebenfalls quer zur Lastrichtung orientiert und kann quer zu der Ebene, in der die Gliederketten verlaufen, oder in dieser liegen.

Im Allgemeinen weist die Anschlagvorrichtung an der Seite, die dem Verbindungsteil gegenüber liegt, zwei nebeneinander angeordnete Anschlussstellen für je ein Endglied jeder Gliederkette auf, wobei diese Anschlussstellen zueinander entlang der Lastrichtung versetzt angeordnet sind, nämlich um einen von Null (das wäre die herkömmliche "gleiche Höhe") verschiedenen linearen Versatz $\upsilon$, der kleiner ist als die Kettenteilung $u_1$, entlang der Lastrichtung. Der lineare Versatz $\upsilon$ hängt mit dem Winkelversatz V über den mittleren Radius $r$ der Ketten auf den Kettenrädern zusammen, $V = \upsilon/r$.

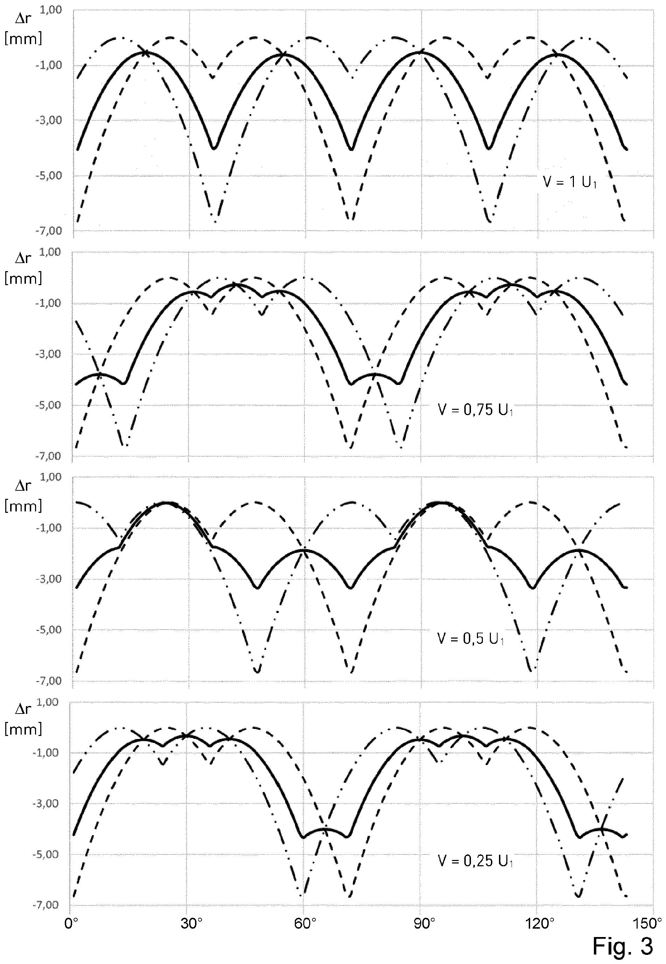

Durch die Lastverteilung auf zwei Kettenstränge, die zueinander um einen Winkelversatz V, mit $0 < V < Ui$, (entsprechend einem linearen Versatz v mit $0 < \upsilon < u_1$) versetzt sind, und die Verwendung einer Ausgleichswippe werden die zeitlich unterschiedlichen radialen Auslenkungen der beiden Kettenstränge weitestgehend ausgeglichen. Dies ist in Fig. 3 illustriert.

In Fig. 3 ist die Abhängigkeit des gemittelten Kettenradius von dem Winkel im Laufe einer Drehung eines Kettenrades illustriert, nämlich anhand von vier Diagrammen, die jeweils vier Varianten entsprechen, die sich in ihrem Winkelversatz V unterscheiden: Im obersten gezeigten Diagramm ist $V = 1\,U_1$ beträgt, darunter ist $V = 0{,}75\,U_1$, im dritten Fall $V = 0{,}5\,Ui$, und im untersten Diagramm $V = 0{,}25\,U_1$. Fig. 3 zeigt das Ergebnis einer Simulation für ein Doppelkettenrad mit pentagonalen Kettenrädern für eine Kette vom Typ 16x45, d.h. der Drahtdurchmesser der Kette ist 16 mm und die Kettenteilung ist $u_1$, = 45 mm. Aufgetragen auf der Hochachse ist die Änderung des effektiven Kettenradius $\Delta r$ (in Millimetern) gegenüber dem Maximalwert. Die beiden unterbrochenen Linien zeigen die Radiusschwankungen der einzelnen Gliederketten - z.B. Strichlinie für den ersten Kettenstrang S1 und Strichpunktlinie für den zweiten Kettenstrang S2 -, und die Volllinie die daraus gemittelte Kurve; diese Kurve wird von der Last, die an dem Verbindungsteil (z. B. Verbindungsteil B1) befestigt ist, "gespürt". Der Ausgleich des Polygoneffekts ergibt sich aus dem Vergleich zwischen der Amplitude der Radiusschwankung einer einzelnen Gliederkette und jener der gemittelten Kurve. Wie in Fig. 3 erkennbar ist, ergibt sich bei $V = 1\,U_1$ (oberstes Diagramm) ein Ausgleich des Polygoneffekts, der einer Reduktion der Amplitude um 47% entspricht; bei $V = 0{,}75\,U_1$ (zweites Diagramm) ist der Ausgleich bei 40%; im dritten Fall mit $V = 0{,}5\,U_1$ ergibt sich ein Ausgleich von 50%, und bei $V = 0{,}25\,U_1$ (unterstes Diagramm) beträgt der Ausgleich wieder 40%.

Dies zeigt deutlich, dass eine nicht zur Erfindung gehörenden Ausgestaltung eine beträchtliche Verringerung des sogenannten Polygoneffektes erreichen kann, wobei die besten Ergebnisse mit einem Versatz V bei $0{,}5\,U_1$ erreicht werden können. Es sei hier angemerkt, dass ein Winkelversatz, dessen Wert über einer Winkelteilung liegt ($V > Ui$), aus Symmetriegründen gleichbedeutend ist mit dem entsprechenden negativen Wert des Winkelversatzes und ebenso (weil die Wirkung des Winkelversatzes um $2U_1$ periodisch ist) mit dem zugehörenden Komplementwert in Bezug auf die doppelte Winkelteilung, d.h. symbolisch:

$$V \leftrightarrow V' = 2U_1 - V \qquad\qquad (1).$$

Es reicht folglich aus, nur solche Werte des Winkelversatzes zu betrachten, die in dem Bereich von 0° bis $U_1$ (einschließlich) liegen. Als Mindestwert für den von 0° verschiedenen Versatz sollte ein Wert gewählt werden, bei dem bereits eine Verringerung des Polygoneffekts bemerkbar ist. Beispielsweise führt für das Doppelkettenrad des gezeigten Ausführungsbeispiels ein Wert von 5° (oder mehr; an der Obergrenze dem entsprechend bis zu 67° = 72°-5°) bereits zu einer Verringerung des Polygoneffekts um ca. 14 % (oder mehr); und ein Winkelversatz von 9° (bzw. 63° = 72°-9°) zu einer Verringerung um ca. 25 %.

Bevorzugt sind daher Werte des Winkelversatzes die zumindest die Hälfte der Winkelteilung ausmachen, d.h. $V \geq U_1/2$; besonders bevorzugt sind Werte, die bei ungefähr 2/3 von $U_1$ liegen; das entspricht im gezeigten Ausführungsbeispiel (bei welchem $U_1 = 36°$) einem Wert von ca. 24°. Die Erfinder gehen aufgrund der anhand der Fig. 3 dargestellten Ergebnisse davon aus, dass im Allgemeinen ein Bereich von $U_1/2 \leq V \leq 2U_1/3$ besonders günstig ist, wobei dieser Bereich beiderseits um ca. $U_1/6$ erweitert werden kann, wenn weniger hohe Anforderungen gestellt werden (somit $U_1/3 \leq V \leq 5U_1/6$). Diesen Bereichen sind natürlich die entsprechenden Komplementärbereiche gleichgestellt, die sich durch Anwendung der obigen Komplementformel (1) und/oder Ersetzen der Werte durch negative Werte ergeben.

Die Anschlagwippe führt während der Bewegung der Ketten um den Kettentrieb schlingernde Ausgleichsbewegungen in Form von geringen Drehungen um die Lastrichtung b aus (das ist z.B. in Fig. 2 an dem kleinen Winkel der Orientierung der Anschlagwippe A1 gegenüber der Drehachse d ersichtlich), die jedoch eine wesentlich geringer störende Auswirkung auf die gehaltene Last haben als die Verlagerung aufgrund des Polygoneffekts.

Die Kettenräder R11, R12 können getrennt gefertigt werden, aus geeigneten Materialien wie z.B. Stahl oder Kunststoffmaterialien, wofür Fertigungsverfahren von an sich bekannter Art eingesetzt werden können, und sodann miteinander verbunden werden, beispielsweise durch Schweißen oder Verkleben. Die beiden Kettenräder können auch durch Aufstecken auf eine Welle (die auch zum Antrieb des Kettentriebs verwendet wen kann) zu einem Doppelkettenrad zusammengebaut werden. Alternativ dazu oder in Kombination damit können die Kettenräder durch lösbare Verbindungen, wie z.B. seitliche Stifte, Passfedernuten, Keilverzahnung od.dgl. miteinander drehfest bzw. starr verbunden werden. In einer Variante kann das Doppelkettenrad D1 auch einstückig gefertigt sein.

Fig. 4 zeigt weitere Einzelheiten der Kettenräder des Kettentriebs der Fig. 1 und 2. Hierbei zeigt Fig. 4a eine Vorderansicht des Kettentriebs (Doppelkettenrad D1) ohne eingelegte Kettenglieder. Die Fig. 4b und 4c zeigen jeweils eine Schnittansicht der beiden Kettenräder entlang ihrer Mittelebenen m1 bzw. m2. Fig. 4d zeigt eine Längsschnittansicht entlang einer Schnittebene durch die Drehachse d des Doppelkettenrades D1.

Fig. 5 zeigt ein Beispiel einer Hebewerkanordnung I1, in der das Doppelkettenrad D1 zusammen mit der ihm zugehörenden Welle W1 in einem auf einer Trägerplatte montierten Gehäuse E1 drehbar gelagert ist. Hierbei enthält Fig. 5 drei Ansichten, nämlich in Fig. 5a eine Vorderansicht, in Fig. 5b eine Seitenansicht, sowie in Fig. 5c eine perspektivische Ansicht der Hebewerkanordnung I1. Das Gehäuse E1 ist auf der Trägerplatte P1 montiert, z.B. mithilfe von Schraubbolzen, die Fußteile des Gehäuses E1 an der Trägerplatte P1 fixieren, oder durch andere geeignete Befestigung. Die Trägerplatte P1 ist mit einem z.B. rechteckigen Fenster P0 versehen, durch die die beiden Ketten in den Kettentrieb hinein und hinaus geführt sind. Das Gehäuse E1 umgibt die Kettenräder R11, R12 und begrenzt innenseitig den Bewegungsraum der Gliederketten auf den Kettenrädern in radialer Richtung. Das Doppelkettenrad D1 ist durch die Welle W1 und deren Halterungen W11, W12 in dem Gehäuse E1 konzentrisch gelagert, sodass das Rad D1 sich in dem Gehäuse E1 drehen kann, ohne dieses zu berühren, und zugleich darin drehbar gehalten ist. Die Halterungen W11, W12 sind in Fig. 5 lediglich angedeutet, sie sind an der Trägerplatte befestigt (nicht gezeigt) und sorgen für eine stabile Lagerung der Welle W1 und somit des Doppelkettenrades D1 in der Hebewerkanordnung in um die Drehachse $d$ drehbarer Weise.

Fig. 6 zeigt eine vereinfachte Darstellung der Hebewerkanordnung, nämlich lediglich den Kettentrieb zusammen mit dem Gehäuse E1 (die Fußteile des Gehäuses sind in Fig. 6 der Deutlichkeit halber fortgelassen). Hierbei zeigt Fig. 6a eine Vorderansicht ohne eingelegte Kettenglieder. Die Fig. 6b und 6c zeigen jeweils eine Schnittansicht entlang der Mittelebenen m1 bzw. m2 der beiden Kettenräder. Fig. 6d zeigt eine Längsschnittansicht entlang einer "horizontalen" Schnittebene 6-6 durch die Drehachse d des Doppelkettenrades D1. Wie insbesondere in der Schnittdarstellung der Fig. 6d ersichtlich ist, weist das Gehäuse innenseitig nebeneinander zwei Nuten F1, F2 auf, in denen stehende Glieder der auf den Kettenrädern laufenden Gliederketten geführt sind. Ein Innenteil K1, auch als Abstreifer bezeichnet, schließt den Kettentrieb ausgangsseitig ab und führt die Kettenabschnitte beim Eintritt in den Kettentrieb sowie insbesondere beim Ablösen ("Abstreifen") der Ketten von den Kettenrädern und Verlassen des Kettentriebs. Das Innenteil K1 ist an den Innenrändern des Fensters P0 der Trägerplatte P1, auf denen es sich abstützt, gehalten.

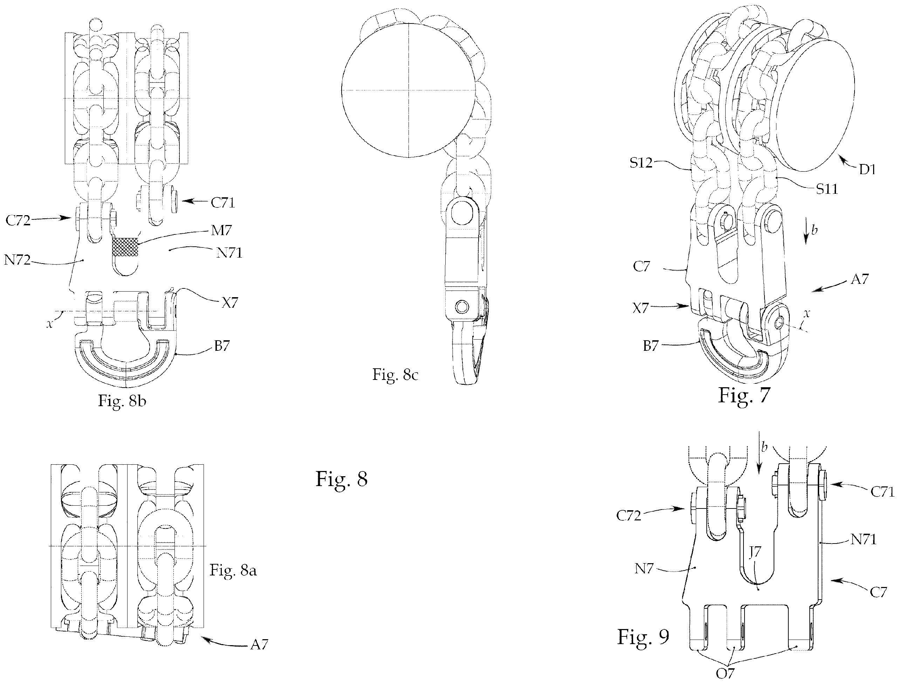

Die nachfolgenden Ausführungsbeispiele der Fig. 7-19 beinhalten verschiedene, nicht zur Erfindung gehörende Ausgestaltungen der Anschlagvorrichtung. Hierbei ist der Deutlichkeit halber jeweils lediglich der Kettentrieb ohne Gehäuse bzw. Hebewerkanordnung gezeigt.

Bezugnehmend auf die Fig. 7 bis 9 kann gemäß einem zweiten Ausführungsbeispiel die Anschlagvorrichtung aufseiten des Verbindungsteils mit einem Anschlagbügel ausgestattet sein. In Fig. 7 ist eine perspektivischen Ansicht eines Kettentriebsystems gemäß dem zweiten Ausführungsbeispiel gezeigt, zusammen mit zwei darauf geführten Kettensträngen S11, S12 eines Kettenzugs, an deren Enden zudem eine Anschlagvorrichtung in Form eines Anschlagbauteils A1 befestigt ist. Die Fig. 8 zeigt das Kettentriebsystem in drei Ansichten (Fig. 8a-8c), nämlich in einer Aufsicht (Fig. 8a), einer Vorderansicht (Fig. 8b) und einer Seitenansicht (Fig. 8c; Blickrichtung parallel zur Drehachse d des Kettenrades und annähernd parallel zur Scharnierachse x der Anschlagbauteils A1). Fig. 9 zeigt die Anschlagvorrichtung der Fig. 7 in einer Vorderansicht.

Das Anschlagbauteil A7, auch als Anschlagwippe A7 bezeichnet, enthält einen Körper C7 sowie einen daran gelenkig verbundenen Anschlagbügel B7. Der Körper C7 ist mit einer U-Form gestaltet, die zwei Schenkel N71, N72 aufweist, an deren Enden jeweils eine von zwei Anschlussstellen C71, C72 vorgesehen ist. Jede Anschlussstelle C71, C72 ist als Gabelanschluss ausgebildet, in dessen Zwischenraum ein Endglied eines Kettenstranges eingelegt und mit einem Bolzen befestigt wird, der z.B. mit einem Splint gesichert wird.

Bezugnehmend auf Fig. 9 haben die Schenkel N71, N72 vorzugsweise einen geringen Querschnitt, was eine elastische Verformung des Körpers C7 ermöglicht und dadurch eine Abfederung und resultierende Verringerung der Schlingerbewegung um die Lastrichtung b gestattet. Zudem oder alternativ dazu kann der Verbindungssteg J7 zwischen den Schenkeln mit geringem Querschnitt ausgeführt sein, um ebenso eine elastische Verformung (insbesondere Torsion) zu gestatten, um eine Bewegung der beiden Ketten quer zur Lastrichtung auszugleichen.

Wie in Fig. 8b erkennbar, kann zwischen den Schenkeln N71, N72 ein Zwischenelement M7 angeordnet sein, das als dämpfendes und/oder federndes Element dient, um die Bewegung der beiden Ketten quer zur Lastrichtung zusätzlich auszugleichen. Das Zwischenelement weist bevorzugt ein verformbares Material zur Dämpfung von Schwingungen zwischen an den Anschlussstellen angebrachten Ketten auf. Das Zwischenelement M7 kann z.B. als Block aus einem elastomeren Material ausgebildet sein, und/oder als hydraulisches Dämpferelement.

Wieder bezugnehmend auf Fig. 9 sind an der den Anschlussstellen C71, C72 abgewandten Seite ("Unterseite") des Körpers C7 Scharnierteile O7 vorgesehen, die mit korrespondierenden Scharnierteilen des Bügels B7 ein scharnierartiges Gelenk bilden. Der Bügel B7 ist dank des so gebildeten Scharniergelenks X7 (Fig. 8b) um eine Achse x verschwenkbar, welche quer zur Lastrichtung *b* und im Wesentlichen in jener Ebene verläuft, in der die Gliederketten verlaufen, (somit im Wesentlichen parallel zur Drehachse *d* des Doppelkettenrades D1). Der Bügel B7 wird mithilfe eines Scharnierstiftes, der entlang der Achse x eingesetzt wird, an dem Körper C7 befestigt. Die Verlaufsrichtung der Bolzen der Anschlussstellen C71, C72 ist bevorzugt parallel zur Orientierung der Scharnierachse x.

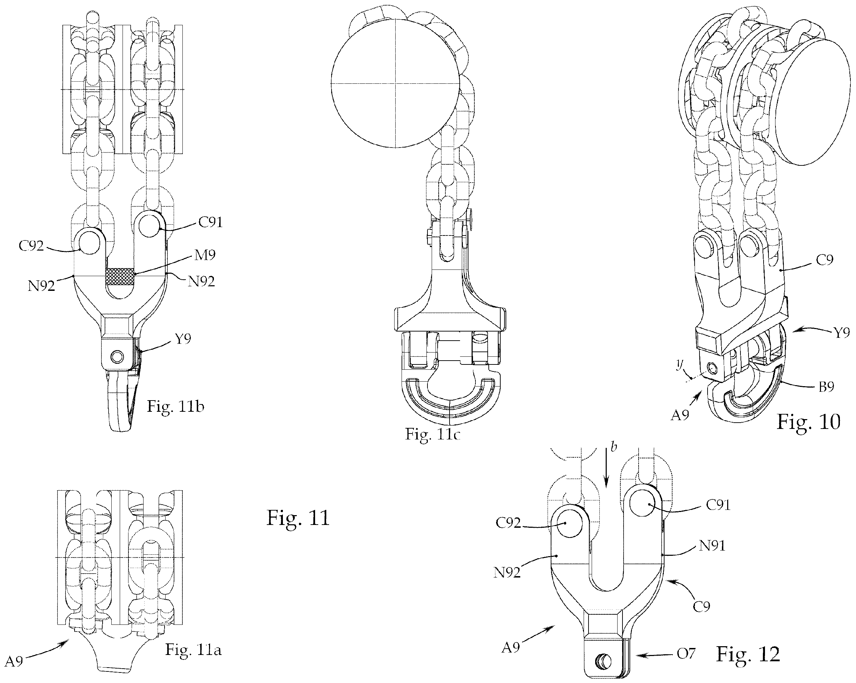

In den Fig. 10 bis 12 ist ein weiteres Ausführungsbeispiel dargestellt, das sich von dem vorhergehenden durch eine andere Orientierung des Anschlagbügels B9 unterscheidet. In Fig. 10 ist eine perspektivischen Ansicht eines Kettentriebsystems gemäß diesem Ausführungsbeispiel. Die Fig. 11 zeigt das Kettentriebsystem in drei Ansichten (Fig. 11a-11c, analog zu Fig. 8a-8c), nämlich in einer Aufsicht (Fig. 11a), einer Vorderansicht (Fig. 11b) und einer Seitenansicht (Fig. 11c). Fig. 12 zeigt die Anschlagwippe A9 der Fig. 10 in einer Vorderansicht.

Bezugnehmend auf Fig. 11 und insbesondere Fig. 12 weist die Anschlagwippe A9 einen Körper C9 auf, an dem ein Anschlagbügel B9 gelenkig verbunden ist; der Anschlagbügel B9 ist dem Anschlagbügel B7 bauartgleich, freilich anders orientiert hinsichtlich des Kettenzugs dieses Ausführungsbeispiels. Der Körper C9 ist wiederum mit einer U-Form mit zwei Schenkeln N91, N92 ausgebildet, an deren Enden jeweils eine von zwei Anschlussstellen C91, C92 vorgesehen ist. Jede Anschlussstelle C91, C92 ist als Gabelanschluss ausgebildet, in dessen Zwischenraum ein Endglied eines Kettenstranges eingelegt und mit einem Bolzen befestigt wird, der z.B. mit einem Splint gesichert wird.

Bezugnehmend auf Fig. 12 haben die Schenkel N91, N92 haben vorzugsweise einen geringen Querschnitt, was eine elastische Verformung des Körpers C9 ermöglicht und dadurch eine Abfederung und resultierende Verringerung der Schlinger- und Ausgleichsbewegungen um die Lastrichtung *b* gestattet. Zudem kann der Verbindungsbereich J9 zwischen den Schenkeln mit geringem Querschnitt ausgeführt sein, um ebenso eine elastische Verformung (insbesondere Torsion) zu gestatten, um eine Bewegung der beiden Ketten quer zur Lastrichtung auszugleichen.

Wie in Fig. 11b erkennbar, kann zwischen den Schenkeln N91, N92 ein Zwischenelement M9 angeordnet sein, das als dämpfendes und/oder federndes Element dient, um die Bewegung der beiden Ketten quer zur Lastrichtung zusätzlich auszugleichen. Das Zwischenelement weist bevorzugt ein verformbares Material zur Dämpfung von Schwingungen zwischen an den Anschlussstellen angebrachten Ketten auf. Das Zwischenelement M9 kann z.B. als Block aus einem elastomeren Material ausgebildet sein, und/oder als hydraulisches Dämpferelement.

Wieder bezugnehmend auf Fig. 12 sind an der den Anschlussstellen C91, C92 abgewandten Seite ("Unterseite") des Körpers C9 Scharnierteile O9 vorgesehen, die mit korrespondierenden Scharnierteilen des Bügels B9 ein scharnierartiges Gelenk bilden. Der Bügel B9 ist dank des so gebildeten Scharniergelenks Y9 (Fig. 11b) um eine Achse x verschwenkbar, welche quer zur Lastrichtung b und im Wesentlichen quer zu der Ebene verläuft, in der die Gliederketten verlaufen, (somit im Wesentlichen senkrecht zur Orientierung der Drehachse d). Der Bügel B9 wird mithilfe eines Scharnierstiftes, der entlang der Achse y eingesetzt wird, an dem Körper C9 befestigt. Die Verlaufsrichtung der Bolzen der Anschlussstellen C91, C92 ist bevorzugt parallel zur Orientierung der Scharnierachse y.

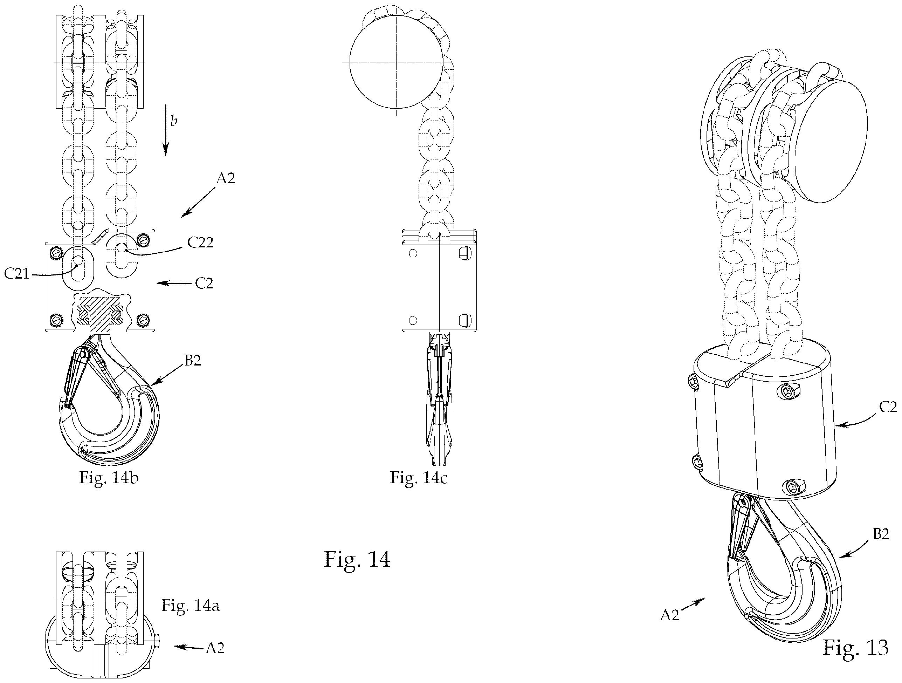

In den Fig. 13 und 14 ist ein Ausführungsbeispiel dargestellt, worin die Anschlagvorrichtung als Anschlagbauteil A2 mit einem Lasthaken B2 ausgebildet ist. Fig. 13 ist eine perspektivischen Ansicht eines Kettentriebsystems gemäß diesem Ausführungsbeispiel. Die Fig. 14 zeigt das Kettentriebsystem in drei Ansichten (Fig. 14a-14c, analog zu Fig. 8a-8c), nämlich in einer Aufsicht (Fig. 14a), einer Vorderansicht (Fig. 14b) und einer Seitenansicht (Fig. 14c).

Das Anschlagbauteil A2 wird von einem Körper C2 gebildet, der büchsenartig gestaltet ist und in dessen "oberem" Bereich Anschlussstellen C21, C22 vorgesehen sind. Mittels dieser Anschlussstellen C21, C21, die im Inneren des Körpers vorgesehen sind, werden jeweilige Endglieder der Kettenstränge eingelegt und mit z.B. einem Bolzen befestigt.

Der Lasthaken B2 ist in der "Unterseite" des Körpers des Anschlagbauteils C2 bevorzugt um eine Achse parallel zur Lastrichtung *b* drehbar gelagert. In einer Variante kann der Lasthaken B2 jedoch drehfest an dem Körper C2 angebracht sein.

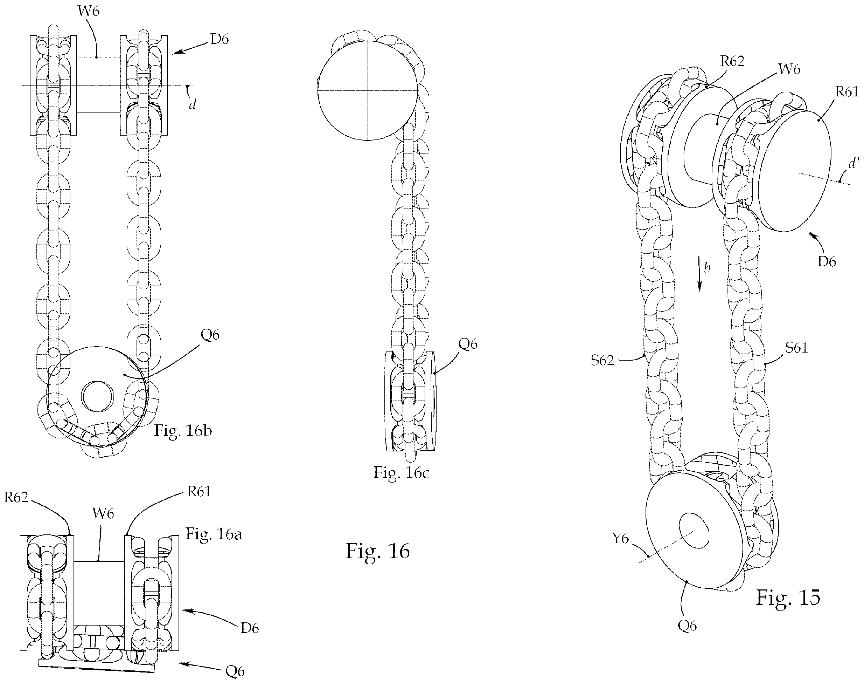

In den oben dargestellten Ausführungsbeispielen ist ein Doppelkettenrad verwendet, in dem die beiden Kettenräder R11, R12 ohne Abstand nebeneinander zusammengefügt sind. Je nach Anwendung können die beiden Kettenräder beabstandet sein, wie in Fig. 16a und 17a-e beispielhaft dargestellt ist. In dem Doppelkettenrad D6 sind zwei Kettenräder R61, R62 durch eine Welle W6 (mit geringerem Durchmesser als die Kettenräder) drehfest miteinander mit einem vorgewählten Winkelversatz V verbunden.

Ein solches Doppelkettenrad D6 mit beabstandeten Kettenrädern kann ohne Weiteres in Ausführungsformen eingesetzt werden, die den vorangehend beschriebenen Ausführungsbeispielen entsprechen, wobei dann in den Anschlagvorrichtungen der Abstand der beiden Anschlussstellen entsprechend vergrößert werden muss, was für den Fachmann ohne Weiteres angepasst werden kann.

Anstelle einer Anschlagvorrichtung kann auch ein Kettenumlenkrad verwendet werden, wie dies im folgenden Ausführungsbeispiel dargestellt ist. Für den Einsatz eines Kettenumlenkrads ist eine Gestaltung des Kettentriebbauteils mit zueinander beabstandeten Kettenrädern besonders zweckmäßig.

Bezugnehmend auf Fig. 15 bis 17 ist ein Kettenzug gezeigt, bei dem die beiden Kettenstränge S61, S62, die auf dem Doppelkettenrad D6 geführt sind, zu derselben Gliederkette gehören; diese ist über ein Kettenumlenkrad Q6 geführt. Fig. 15 zeigt das Kettentriebsystem gemäß diesem Ausführungsbeispiel; Fig. 16 zeigt das Kettentriebsystem in drei Ansichten (Fig. 16a-16c, analog zu Fig. 8a-8c), nämlich in einer Aufsicht (Fig. 16a), einer Vorderansicht (Fig. 16b) und einer Seitenansicht (Fig. 16c). In Fig. 17 ist das Doppelkettenrad D6 in mehreren Ansichten (Fig. 17a-e) gezeigt, und zwar zeigt Fig. 17a eine Vorderansicht ohne eingelegte Kettenglieder; Fig. 17b und 17c jeweils eine Schnittansicht eines der beiden Kettenräder R61, R62 entlang der jeweiligen Mittelebene m1' bzw. m2'; Fig. 17d ist eine Längsschnittansicht entlang einer Schnittebene 7-7 entlang der Drehachse d' des Doppelkettenrades D6; und Fig. 17e ist eine perspektivischen Ansicht des Doppelkettenrades D6.

In dem Kettenzug dieses Ausführungsbeispiels ist die Gliederkette mit einem ersten Abschnitt, der dem ersten Kettenstrang S61 entspricht, über das erste Kettenrad R61 des als Doppelkettenrad D6 ausgeführten Kettentriebbauteils geführt, am Ende der Lastrichtung b um das Kettenumlenkrad Q6 geführt und läuft mit einem zweiten Abschnitt, der dem zweiten Kettenstrang S62 entspricht, wieder über das zweite Kettenrad R62 des Doppelkettenrades D6 zurück.

Die Größe des Abstandes der beiden Kettenräder R61 und R62 zueinander (d.i. die Länge der Welle W6, gemessen entlang der Drehachse d') kann z.B. in günstiger Weise so gewählt werden, dass der Abstand der beiden Mittelebenen m1' und m2' zueinander dem mittleren Umlaufdurchmesser der Kette, die um das Kettenumlenkrad Q6 geführt ist, entspricht.

Das Kettenumlenkrad Q6 kann eine zentrale Achsbohrung Y6 längs seiner Drehachse aufweisen, oder (nicht gezeigt) mit einer vorzugsweise beiderseits abstehenden Welle ausgebildet sein. Die Drehachse des Kettenumlenkrads Q6 bzw. der Achsbohrung Y6 wird infolge der Bewegung der Kettenstränge geringfügig schlingern, ist jedoch im Mittel im Wesentlichen senkrecht zur Ausrichtung der Drehachse d' des Doppelkettenrad D6 orientiert. In der Achse des Doppelkettenrades D6 kann zur Befestigung einer Last vorgesehen sein, beispielsweise mithilfe einer durch die Achsbohrung Y6 geführten Stange (nicht gezeigt) od. dgl.

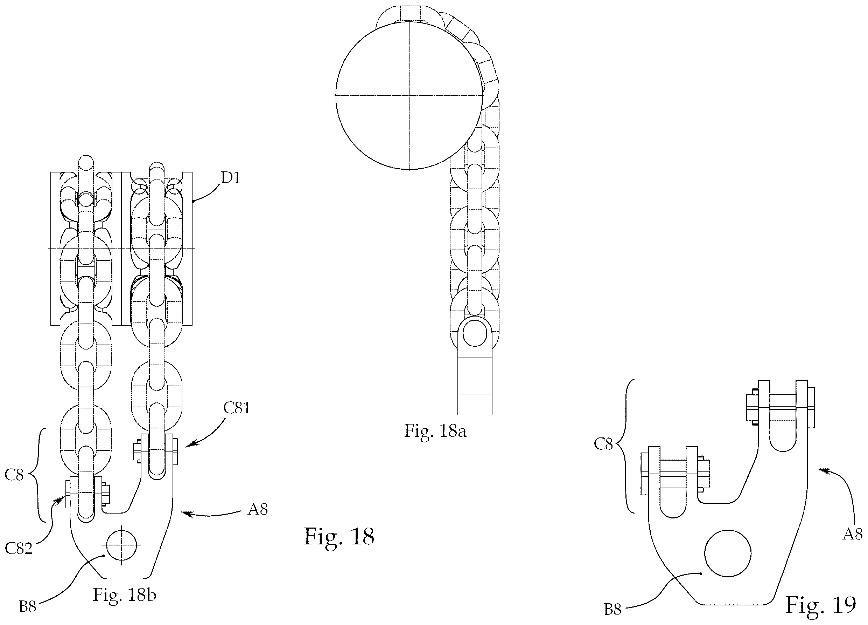

In den Fig. 18 und 19 ist noch ein weiteres Ausführungsbeispiel dargestellt, das ähnlich dem Ausführungsbeispiel der Fig. 1 und 2 ist, jedoch ein einstückiges Anschlagbauteil A8 beinhaltet. Fig. 18 zeigt das Kettentriebsystem gemäß diesem Ausführungsbeispiel in einer Seitenansicht (Fig. 18a) und einer Vorderansicht (Fig. 18b); Fig. 19 zeigt das Anschlagbauteil A8 in einer Vorderansicht.

Das Anschlagbauteil A8 ("Anschlagwippe") weist einen Anschlussabschnitt C8 und einen Verbindungsteil B8 auf. Der Anschlussabschnitt C8 umfasst zwei Anschlussstellen C81, C82, die jeweils ein Paar einander gegenüberliegender Bohrungen aufweisen, durch die ein Bolzen geführt werden kann, in diesem Ausführungsbeispiel jeweils entlang einer Richtung parallel zur Drehachse d. Der Verbindungsteil B8 enthält ein Öhr, in dessen Öffnung ein Haken eingehängt oder anderes Anschlagmittel, an dem die Last befestigt ist, angebracht werden kann. Alternativ zu oder in Kombination mit dem Öhr kann auch eine Gewindebohrung (nicht gezeigt) vorgesehen sein, d.h. eine Öffnung mit einem Innengewinde. Im Übrigen gilt für das Anschlagbauteil A8 das zu der Anschlagwippe A1 anhand der Fig. 1 und 2 Erläuterte sinngemäß.

Natürlich ist der Fachmann in der Lage, die Erfindung in Anbetracht der dargestellten Ausführungsformen und der Beschreibung abzuändern und an gegebene Erfordernisse anzupassen. Der technische Aufbau der Erfindung ist daher nicht auf die dargestellten Ausführungsformen beschränkt; vielmehr erstreckt sich die Erfindung auf den gesamten Schutzbereich, der sich aus den nachstehenden Ansprüchen ergibt.

**Patentansprüche**

1. Kettentrieb (D0) für einen Kettenzug mit zwei Gliederkettensträngen (S11, S12), wobei der Kettentrieb zwei Kettenräder (R11, R12) aufweist, die nebeneinander auf einer Welle des Kettentriebs und zueinander drehfest angeordnet sind,

   wobei jedes Kettenrad zur Führung jeweils eines Abschnitts einer Gliederkettenstranges mit abwechselnd liegenden (L) und stehenden (T) Gliedern ausgebildet ist, nämlich mit Taschen (H) zur Aufnahme liegender Glieder und mit einer in Umfangsrichtung verlaufenden Rille (F) zur Aufnahme stehender Glieder,
   wobei die beiden Kettenräder (R11, R12) zueinander ohne relativen Winkelversatz angeordnet sind.

2. Kettentrieb nach einem der vorhergehenden Ansprüche, **gekennzeichnet durch** ein Gehäuse (E1), das die Kettenräder umgibt und innenseitig den Bewegungsraum der Kettenglieder auf den Kettenrädern in radialer Richtung begrenzt.

3. Kettentrieb nach Anspruch 2, wobei das Gehäuse innenseitig nebeneinander zwei Nuten (F1, F2) aufweist, in denen stehende Glieder der auf den Kettenrädern laufenden Gliederkettenstränge geführt sind.

4. Kettenzug mit verdoppelter Gliederkette, umfassend einen Kettentrieb (D1, D6) nach einem der vorhergehenden Ansprüche und zwei Gliederkettenstränge (S11, S12), die über je eines der beiden Kettenräder (R11, R12) geführt sind.

Fig. 1

Fig. 2c

Fig. 2

Fig. 2b

Fig. 2a

Fig. 20

Fig. 3

Fig. 4a

Fig. 4d

Fig. 4b

Fig. 4c

Fig. 4

Fig. 6a

Fig. 6d

Fig. 6b

Fig. 6c

Fig. 6

EP 4 292 973 A2

F1

F2

E1

D1

W1

d

W12

W11

P1

P0

Fig. 5b

I1

D1

E1

K1

P1

Fig. 5a

I1

E1

D1

W1

W11

W12

P1

Fig. 5c

P0

K1

Fig. 5

EP 4 292 973 A2

13

C72
C71
M7
N72
N71
X7
B7

Fig. 8b

Fig. 8c

Fig. 8

A7

Fig. 8a

S12
S11
D1
b
C7
A7
X7
B7

Fig. 7

b
C72
C71
J7
N71
N7
C7
O7

Fig. 9

Fig. 10

Fig. 11

Fig. 11a

Fig. 11b

Fig. 11c

Fig. 12

Fig. 13

Fig. 14

Fig. 14a

Fig. 14b

Fig. 14c

W6

D6

$d'$

Q6

Fig. 16b

R62    W6    R61

Fig. 16a

D6

Q6

Fig. 16c

Q6

Fig. 16

R62    W6    R61

$d'$

D6

$b$

S62    S61

Y6

Q6

Fig. 15

EP 4 292 973 A2

Fig. 17a

Fig. 17b

Fig. 17c

Fig. 17d

Fig. 17e

Fig. 17

Fig. 19

Fig. 18a

Fig. 18

Fig. 18b